# EUROPEAN PATENT APPLICATION

(11) **EP 4 844 931 A1**
(43) Date of publication of application: **25.11.2026**
(21) Application number: 25741400.3
(22) Date of filing: 09.01.2025
(51) Int. Cl.: H01M 50/491

(54) **SEPARATOR, AND ELECTROCHEMICAL DEVICE AND ELECTRONIC DEVICE COMPRISING SAME**

(30) Priority: 15.01.2024 CN 202410056354
(71) Applicant: Ningde Amperex Technology Limited, Ningde, Fujian 352100 (CN)
(72) Inventor: CHEN, Minjing, Ningde, Fujian 352100 (CN)
(74) Representative: Dehns Germany Partnerschaft mbB
(86) International application number: PCT/CN2025/071413
(87) International publication number: WO 2025/152838

(57) **Abstract**

This application discloses a separator, an electrochemical device containing same, and an electronic device. The separator includes a porous substrate and a porous coating located on at least one side of the porous substrate. The porous coating includes filler particles and a binder. A maximum pore size of the separator is denoted as Dₘₐₓ, a minimum pore size of the separator is denoted as Dₘᵢₙ, and an average pore size of the separator is denoted as D_{avg}, all in units of nm, Dₘₐₓ is 35 nm to 75 nm, Dₘᵢₙ is 10 nm to 20 nm, D_{avg} is 25 nm to 45 nm, and Dₘₐₓ/D_{avg} is 1.20 to 2.99. This application enables the electrochemical device to be superior in both low-temperature cycle performance and high-temperature stability.

## Description

This application claims priority to Chinese Patent Application No. 202410056354.1, filed with China National Intellectual Property Administration on January 15, 2024 and entitled "SEPARATOR, ELECTROCHEMICAL DEVICE CONTAINING SAME, AND ELECTRONIC DEVICE", which is incorporated herein by reference in its entirety.

### TECHNICAL FIELD

This application relates to the field of electrochemical technology, and in particular, to a separator, an electrochemical device containing same, and an electronic device.

### BACKGROUND

With the increase in the demand for a high energy density and a long cycle life of lithium-ion batteries, more stringent requirements have been placed on the performance of separators. In the prior art, a uniform pore size of a separator is generally pursued. However, during actual charging and discharging of a lithium-ion battery, due to a significant difference in the migration rate of lithium ions between a positive electrode and a negative electrode, the separator with a uniform pore size causes the lithium ions deintercalated from the positive electrode to be unable to intercalate into the negative electrode in time, thereby resulting in purple-spot lithium plating on the negative electrode and impairing the cycle performance of the battery.

### SUMMARY

This application provides a separator, an electrochemical device containing same, and an electronic device. The separator enables the electrochemical device to be superior in both low-temperature cycle performance and high-temperature stability.

According to a first aspect, this application provides a separator. The separator includes a porous substrate and a porous coating located on at least one side of the porous substrate. The porous coating includes filler particles and a binder. A maximum pore size of the separator is denoted as Dₘₐₓ, a minimum pore size of the separator is denoted as Dₘᵢₙ, and an average pore size of the separator is denoted as D_{avg}, all in units of nm, Dₘₐₓ is 35 nm to 75 nm, Dₘᵢₙ is 10 nm to 20 nm, D_{avg} is 25 nm to 45 nm, and Dₘₐₓ/D_{avg} is 1.20 to 2.99.

By adjusting the ranges of the maximum pore size, minimum pore size, and average pore size of the separator, this application make the pore size of the separator exhibit a non-uniform characteristic. As a result, the separator provided herein can balance the migration rate of lithium ions on a positive electrode side of the separator and the migration rate of lithium ions on a negative electrode side of the separator, thereby facilitating smooth intercalation of the lithium ions into a negative electrode and effectively alleviating the problem of purple-spot lithium plating on the negative electrode, and in turn, improving the low-temperature cycle performance of the electrochemical device. In addition, the separator provided in an embodiment of this application includes a porous coating, and therefore, can also exhibit high thermal stability and a relatively low degree of thermal shrinkage, thereby also endowing the electrochemical device with superior high-temperature stability. Therefore, the separator provided in an embodiment of this application enables the electrochemical device to be superior in both low-temperature cycle performance and high-temperature stability.

In some embodiments, Dₘₐₓ/D_{avg} is 1.20 to 2.62, and/or, Dₘᵢₙ/D_{avg} is 0.35 to 0.59.

Optionally, Dₘₐₓ/D_{avg} is 1.60 to 2.23, and/or, Dₘᵢₙ/D_{avg} is 0.43 to 0.57.

By further adjusting the relationships between the maximum pore size, minimum pore size, and average pore size of the separator, that is, Dₘₐₓ/D_{avg} and/or Dₘᵢₙ/D_{avg}, to fall within the above ranges, this application enables the pore size of the separator to more vividly exhibit a non-uniform characteristic, thereby striking a better balance between the low-temperature cycle performance and the high-temperature stability of the electrochemical device.

In some embodiments, Dₘₐₓ/Dₘᵢₙ is 3.39 to 6.05.

Optionally, Dₘₐₓ/Dₘᵢₙ is 3.67 to 4.54.

By further adjusting the relationship between the maximum pore size and minimum pore size of the separator, that is, Dₘₐₓ/Dₘᵢₙ, to fall within the above range, this application strikes a better balance between the low-temperature cycle performance and the high-temperature stability of the electrochemical device.

In some embodiments, a total pore area of pores with a pore size of 30 nm to 45 nm in the separator accounts for 10% to 35%, or optionally 14% to 27%, of a total pore area of the separator.

By further adjusting the proportion of the total pore area of the pores with a pore size of 30 nm to 45 nm to fall within the above range, this application improves the ion transport characteristics of the separator, facilitates the flow of an electrolyte, and in turn, improves the low-temperature cycle performance of the electrochemical device more effectively.

In some embodiments, a porosity of the porous substrate is 20% to 50%.

In some embodiments, an average pore size of the porous substrate is 30 nm to 60 nm.

In some embodiments, a thickness of the porous substrate is 4 µm to 15 µm.

In some embodiments, a porosity of the separator subjected to heating at 130 °C for 1 hour is 30% to 60%.

In some embodiments, an areal density of the separator is 1 g/m² to 5 g/m².

In some embodiments, a total thickness of the separator is 10 µm to 17 µm.

In some embodiments, a thickness of the porous coating is 2 µm to 10 µm.

In some embodiments, the filler particles include at least one of organic particles or inorganic particles.

In some embodiments, the organic particles include vinylidene fluoride-based resin particles, and volume distribution particle sizes of the organic particles are as follows: Dv50 is 0.8 µm to 2 µm, Dv90 is 1.5 µm to 4 µm, and Dv10 is 0.1 µm to 1.8 µm.

By adjusting the volume distribution particle size of the organic particles to fall within the above range, it is convenient to adjust the pore size and pore size distribution of the separator, thereby facilitating the flow of the electrolyte, improving the thermal stability of the separator, reducing the degree of thermal shrinkage of the separator, and in turn, striking a better balance between the low-temperature cycle performance and the high-temperature stability of the electrochemical device.

In some embodiments, an aspect ratio of the organic particles is (1 to 1.5):1.

By adjusting the aspect ratio of the organic particles to fall within the above range, it is convenient to adjust the pore size and pore size distribution of the separator, thereby improving the thermal stability of the separator and reducing the degree of thermal shrinkage of the separator. Moreover, this configuration can fully utilize the adhesiveness of the organic particles, improve the bonding strength between the filler particles within the porous coating as well as the bonding strength between the porous coating and the porous substrate, thereby reducing the impedance of the separator and improving the low-temperature cycle performance of the electrochemical device.

In some embodiments, the inorganic particles include ceramic particles, and volume distribution particle sizes of the inorganic particles are as follows: Dv50 is 1 µm to 4 µm, Dv90 is 2 µm to 6 µm, and Dv10 is 0.6 µm to 1.2 µm.

By adjusting the volume distribution particle size of the inorganic particles to fall within the above range, it is convenient to adjust the pore size and pore size distribution of the separator, thereby facilitating the flow of the electrolyte, improving the thermal stability of the separator, reducing the degree of thermal shrinkage of the separator, and in turn, striking a better balance between the low-temperature cycle performance and the high-temperature stability of the electrochemical device.

In some embodiments, an aspect ratio of the inorganic particles is (2 to 5):1.

By adjusting the aspect ratio of the inorganic particles to fall within the above range, it is convenient to adjust the pore size and pore size distribution of the separator, thereby improving the thermal stability of the separator, reducing the degree of thermal shrinkage of the separator, and in turn, improving the low-temperature cycle performance of the electrochemical device.

In some embodiments, the binder includes a copolymer containing at least two structural units. The at least two structural units are all derived from monomers containing an unsaturated double bond. Of the monomers containing an unsaturated double bond, at least one contains an ester group, and at least one contains no ester group. A weight-average molecular weight of the binder is 800,000 to 1,800,000.

By making the comonomers of the binder include both an ester-group-containing monomer and a non-ester-group-containing monomer, this application makes the separator superior in both lyophilicity and heat resistance, thereby further improving the low-temperature cycle performance and high-temperature stability of the electrochemical device.

In some embodiments, the monomer containing an ester group includes at least one of methyl methacrylate, ethyl methacrylate, isooctyl acrylate, n-propyl acrylate, butyl acrylate, cyclohexyl acrylate, or 2-hydroxyethyl acrylate. By adjusting the types of the monomers containing an ester group to fall within the above range, this application further improves the lyophilicity of the separator.

In some embodiments, the monomer containing no ester group includes at least one of styrene, butadiene, methacrylamide, acrylamide, or acrylonitrile. By adjusting the types of the monomers containing no ester group to fall within the above range, this application further improves the heat resistance of the separator.

In some embodiments, the binder includes a copolymer formed from the following three monomers: styrene, methyl methacrylate, and isooctyl acrylate. Based on a total mass of the three monomers being 100 parts, a mass of styrene is 75 parts to 90 parts, a mass of the methyl methacrylate is 2 parts to 5 parts, and a remainder is isooctyl acrylate. This configuration improves the low-temperature cycle performance and high-temperature stability of the electrochemical device.

In some embodiments, the binder includes a copolymer formed from the following two monomers: styrene and butyl acrylate, and a mass ratio between the two monomers is (1 to 5):1. This configuration improves the low-temperature cycle performance and high-temperature stability of the electrochemical device.

According to a second aspect, this application provides an electrochemical device. The electrochemical device includes a positive electrode plate, a negative electrode plate, an electrolyte, and a separator. The separator includes the separator according to the first aspect of this application.

In some embodiments, the electrolyte contains 1,3-propane sultone and ethylene sulfate. A mass fraction of the 1,3-propane sultone in a total mass of the electrolyte is A, a mass fraction of the ethylene sulfate in the total mass of the electrolyte is B, satisfying: 2.0 ≤ A/B ≤ 8.0. When the ratio between the 1,3-propane sultone and the ethylene sulfate is adjusted to satisfy the range specified herein, a synergistic effect occurs between the two additives. In this way, during the cycling of the electrochemical device, a structurally stable and uniform solid electrolyte interphase (SEI) film with a thickness of several tens of nanometers can be formed on a surface of a positive active material. The formation of the SEI film can reduce the oxidative decomposition of the electrolyte. In addition, by capturing gas molecules on the interface, the film can reduce the temperature rise of the electrochemical device under a fast-charge test, thereby improving the fast-charge performance and high-temperature cycle stability of the electrochemical device.

Optionally, 3.5 ≤ A/B ≤ 7.25. This configuration more effectively reduces the temperature rise of the electrochemical device under a fast-charge test, and improves the fast-charge performance and high-temperature cycle stability of the electrochemical device.

Optionally, 4.0 ≤ A/B ≤ 6.5. This configuration more effectively reduces the temperature rise of the electrochemical device under a fast-charge test, and improves the fast-charge performance and high-temperature cycle stability of the electrochemical device.

In some embodiments, the positive electrode plate includes a positive active material. A powder volume resistivity of the positive active material at 15 MPa is 100 KΩ·cm to 450 KΩ·cm. When the positive active material exhibits a powder volume resistivity satisfying this range, the migration rate of lithium ions between the positive electrode and the negative electrode can be kept at an appropriate level, thereby effectively improving the low-temperature cycle performance of the electrochemical device.

According to a third aspect, this application provides an electronic device. The electronic device includes the electrochemical device according to the second aspect of this application.

### DETAILED DESCRIPTION

To make the objectives, technical solutions, and advantages of this application clearer, the following gives a clear and comprehensive description of the technical solutions of this application with reference to embodiments. Evidently, the described embodiments are merely a part of but not all of the embodiments of this application. The embodiments described herein are illustrative in nature, and are intended to enable a basic understanding of this application. No embodiment of this application is to be construed as a limitation on this application. All other embodiments derived by a person skilled in the art based on the technical solutions and embodiments provided herein without making any creative efforts still fall within the protection scope of this application.

For brevity, some specific numerical ranges are disclosed herein for illustrative purpose only. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

In the description of this application, unless otherwise specified, a numerical value qualified by "at least" or "at most" includes this numerical value.

Unless otherwise specified, the terms used in this application have the well-known meanings commonly understood by a person skilled in the art. Unless otherwise specified, the value of a parameter mentioned in this application may be measured by various measurement methods commonly used in the art (for example, may be tested according to the method described in an embodiment of this application). Unless otherwise noted, for parameters mentioned herein, the test temperature is 25 °C, and the test pressure is standard atmospheric pressure.

The terms such as "at least one of", "at least one selected from", and "at least one thereof" preceding a list of items may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single component or a plurality of components. The item B may include a single component or a plurality of components. The item C may include a single component or a plurality of components.

The term "a plurality of" means two or more.

A charging process of a lithium-ion battery refers to a process by which, driven by an electric field, lithium ions deintercalate from a positive electrode, pass through an electrolyte and a separator, and intercalate into a negative electrode. However, in the case of abnormal situations, for example, in the case that lithium ions smoothly deintercalate from the positive electrode but cannot intercalate into the negative electrode in an equal amount, the lithium ions that are unable to intercalate into the negative electrode can only gain electrons at the surface of the negative electrode, thereby forming silvery-white elemental metallic lithium on the surface of the negative electrode, and giving rise to the problem of lithium plating.

In the prior art, a uniform pore size of a separator is generally pursued. However, during actual charging and discharging of a lithium-ion battery, due to differences in the rate at which lithium ions deintercalate from the positive electrode, the rate at which lithium ions intercalate into the negative electrode, and the rate at which lithium ions migrate between the positive and negative electrodes, and the like, the separator with a uniform pore size causes the lithium ions deintercalated from the positive electrode to be unable to intercalate into the negative electrode in an equal amount, thereby resulting in purple-spot lithium plating on the negative electrode and impairing the cycle performance of the battery. Especially, in a low-temperature environment, the ionic conductivity of the electrolyte is further reduced. In this case, the impedance for lithium ions to deintercalate from the positive electrode increases, the impedance for lithium ions to intercalate into the negative electrode increases, and at the same time, the migration resistance of solvated lithium ions in the electrolyte significantly increases while the migration rate of the solvated lithium ions significantly decreases, thereby further exacerbating the problem of purple-spot lithium plating on the negative electrode.

In view of this situation, from the perspective of the separator first, this application enables, by adjusting the pore size of the separator, an electrochemical device to be superior in both low-temperature cycle performance and high-temperature stability. Furthermore, this application also selects a more suitable electrolyte from the perspective of compatibility between the electrolyte and the separator, thereby further improving the high-temperature stability and fast-charge performance of the electrochemical device.

According to a first aspect, an embodiment of this application provides a separator.

The separator includes a porous substrate and a porous coating located on at least one side of the porous substrate. The porous coating includes filler particles and a binder. A maximum pore size of the separator is denoted as Dₘₐₓ, a minimum pore size of the separator is denoted as Dₘᵢₙ, and an average pore size of the separator is denoted as D_{avg}, all in units of nm, Dₘₐₓ is 35 nm to 75 nm, Dₘᵢₙ is 10 nm to 20 nm, D_{avg} is 25 nm to 45 nm, and Dₘₐₓ/D_{avg} is 1.20 to 2.99.

The separator provided in this embodiment of this application satisfies: Dₘₐₓ is 35 nm to 75 nm, Dₘᵢₙ is 10 nm to 20 nm, D_{avg} is 25 nm to 45 nm, and Dₘₐₓ/D_{avg} is 1.20 to 2.99. By adjusting the ranges of the maximum pore size, minimum pore size, and average pore size of the separator, this application enables the pore size of the separator to exhibit a non-uniform characteristic. In contrast to the prior art that pursues a separator with a uniform pore size, the separator provided in this embodiment of this application can balance the migration rate of lithium ions on the positive electrode side of the separator and the migration rate of lithium ions on the negative electrode side of the separator, thereby facilitating smooth intercalation of the lithium ions into the negative electrode and effectively alleviating the problem of purple-spot lithium plating on the negative electrode, and in turn, improving the low-temperature cycle performance of the electrochemical device. In addition, the separator provided in an embodiment of this application includes a porous coating, and therefore, can also exhibit high thermal stability and a relatively low degree of thermal shrinkage, thereby also endowing the electrochemical device with superior high-temperature stability.

Therefore, the separator provided in an embodiment of this application enables the electrochemical device to be superior in both low-temperature cycle performance and high-temperature stability.

In some embodiments, Dₘₐₓ/D_{avg} is 1.20 to 2.80, for example, may be 1.20, 1.28, 1.34, 1.37, 1.40, 1.43, 1.48, 1.52, 1.60, 1.70, 1.80, 1.90, 2.01, 2.09, 2.17, 2.20, 2.23, 2.35, 2.48, 2.62, 2.80, or a value falling within a range formed by any two thereof.

In some embodiments, Dₘᵢₙ/D_{avg} is 0.35 to 0.67, for example, may be 0.35, 0.37, 0.40, 0.43, 0.45, 0.47, 0.49, 0.52, 0.55, 0.57, 0.59, 0.61, 0.63, 0.65, 0.67, or a value falling within a range formed by any two thereof.

In some embodiments, Dₘₐₓ/D_{avg} is 1.20 to 2.62, and/or, Dₘᵢₙ/D_{avg} is 0.35 to 0.59.

By further adjusting the relationships between the maximum pore size, minimum pore size, and average pore size of the separator, that is, Dₘₐₓ/D_{avg} and/or Dₘᵢₙ/D_{avg}, to fall within the above ranges, this application enables the pore size of the separator to more vividly exhibit a non-uniform characteristic, thereby striking a better balance between the low-temperature cycle performance and the high-temperature stability of the electrochemical device.

When Dₘₐₓ/D_{avg} is relatively small and/or Dₘᵢₙ/D_{avg} is relatively large, the pore size of the separator tends toward uniformity, thereby being unfavorable for a balance between the migration rate of lithium ions on the positive electrode side of the separator and the migration rate of lithium ions on the negative electrode side of the separator, and in turn, impairing the low-temperature cycle performance of the electrochemical device.

When Dₘₐₓ/D_{avg} is relatively large and/or Dₘᵢₙ/D_{avg} is relatively small, the maximum pore size of the separator is relatively large and the minimum pore size is relatively small, thereby also being unfavorable for a balance between the migration rate of lithium ions on the positive electrode side of the separator and the migration rate of lithium ions on the negative electrode side of the separator, and in turn, impairing the low-temperature cycle performance of the electrochemical device. In addition, when Dₘₐₓ/D_{avg} is relatively large, the overall thermal stability of the separator deteriorates, and the degree of thermal shrinkage is relatively high, thereby further impairing the high-temperature stability of the electrochemical device.

Optionally, Dₘₐₓ/D_{avg} is 1.60 to 2.23, and/or, Dₘᵢₙ/D_{avg} is 0.43 to 0.57. This configuration strikes a better balance between the low-temperature cycle performance and the high-temperature stability of the electrochemical device.

In some embodiments, Dₘₐₓ/Dₘᵢₙ is 2.20 to 6.50, for example, may be 2.20, 2.35, 2.50, 2.65, 2.80, 3.00, 3.12, 3.25, 3.39, 3.50, 3.58, 3.67, 3.73, 3.80, 3.90, 4.00, 4.10, 4.20, 4.30, 4.42, 4.54, 4.65, 4.80, 4.90, 5.00, 5.10, 5.20, 5.30, 5.40, 5.50, 5.60, 5.70, 5.80, 5.90, 6.05, 6.20, 6.35, 6.50, or a value falling within a range formed by any two thereof.

By further adjusting the relationship between the maximum pore size and minimum pore size of the separator, that is, Dₘₐₓ/Dₘᵢₙ, to fall within the above range, this application strikes a better balance between the low-temperature cycle performance and the high-temperature stability of the electrochemical device.

When Dₘₐₓ/Dₘᵢₙ is relatively small, the pore size of the separator tends toward uniformity, thereby being unfavorable for a balance between the migration rate of lithium ions on the positive electrode side of the separator and the migration rate of lithium ions on the negative electrode side of the separator, and in turn, impairing the low-temperature cycle performance of the electrochemical device.

When Dₘₐₓ/Dₘᵢₙ is relatively large, the maximum pore size of the separator is relatively large and the minimum pore size is relatively small, thereby also being unfavorable for a balance between the migration rate of lithium ions on the positive electrode side of the separator and the migration rate of lithium ions on the negative electrode side of the separator, and in turn, impairing the low-temperature cycle performance of the electrochemical device; in addition, the overall thermal stability of the separator deteriorates, and the degree of thermal shrinkage is relatively high, thereby further impairing the high-temperature stability of the electrochemical device.

Optionally, Dₘₐₓ/Dₘᵢₙ is 3.39 to 6.05. Further optionally, Dₘₐₓ/Dₘᵢₙ is 3.67 to 4.54. This configuration strikes a better balance between the low-temperature cycle performance and the high-temperature stability of the electrochemical device.

In some embodiments, a total pore area of pores with a pore size of 30 nm to 45 nm in the separator accounts for 10% to 35% of a total pore area of the separator, for example, may account for 10%, 12%, 14%, 16%, 18%, 20%, 22%, 25%, 27%, 30%, 32%, 35%, or a value falling within a range formed by any two thereof.

By further adjusting the proportion of the total pore area of the pores with a pore size of 30 nm to 45 nm to fall within the above range, this application improves the ion transport characteristics of the separator, facilitates the flow of an electrolyte, and in turn, improves the low-temperature cycle performance of the electrochemical device more effectively.

Optionally, the total pore area of the pores with a pore size of 30 nm to 45 nm in the separator accounts for 14% to 27% of the total pore area of the separator. This configuration further improves the low-temperature cycle performance of the electrochemical device.

By adjusting the parameters of the porous substrate, such as pore size, pore size distribution, and porosity, as well as the parameters of the porous coating, such as the mass percentage of the filler particles, the mass percentage of the binder, and the morphology and particle size of the filler particles, and the like, this application can adjust the pore size and pore size distribution of the separator.

In some embodiments, the porosity of the porous substrate may be 20% to 50%, for example, may be 20%, 22%, 24%, 26%, 28%, 30%, 32%, 34%, 36%, 38%, 40%, 42%, 44%, 46%, 48%, 50%, or a value falling within a range formed by any two thereof. A porosity falling within this range is more conducive to improving the low-temperature cycle performance of the electrochemical device.

In some embodiments, the average pore size of the porous substrate may be 30 nm to 60 nm, for example, may be 30 nm, 32 nm, 34 nm, 36 nm, 38 nm, 40 nm, 42 nm, 44 nm, 46 nm, 48 nm, 50 nm, 52 nm, 54 nm, 56 nm, 58 nm, 60 nm, or a value falling within a range formed by any two thereof. A porous substrate falling within this average pore size range is more conducive to improving the low-temperature cycle performance of the electrochemical device.

In some embodiments, the thickness of the porous substrate may be 4 µm to 15 µm, for example, may be 4 µm, 5 µm, 6 µm, 7 µm, 8 µm, 9 µm, 10 µm, 11 µm, 12 µm, 13 µm, 14 µm, 15 µm, or a value falling within a range formed by any two thereof. A thickness of the porous substrate falling within this range is more conducive to improving the low-temperature cycle performance of the electrochemical device.

The material of the porous substrate is not particularly limited herein, as long as the objectives of this application can be achieved. For example, the porous substrate may be a nonwoven fabric, a film, or a composite film, each assuming a porous structure. The material of the porous substrate may include at least one of polyethylene (PE), polypropylene (PP), polyethylene terephthalate, polyimide, polyamide, spandex, or aramid. Optionally, the substrate layer may be a polypropylene porous film, a polyethylene porous film, a polypropylene non-woven fabric, a polyethylene non-woven fabric, or a polypropylene-polyethylene-polypropylene porous composite film.

In some embodiments, a preparation method of the porous substrate may include the following steps: mixing a first pore-forming agent with first polymer particles at a preset mixing ratio to obtain a mixture 1; mixing a second pore-forming agent with second polymer particles at a preset mixing ratio to obtain a mixture 2, where the weight-average molecular weight of the first polymer particles is greater than the weight-average molecular weight of the second polymer particles; adding the mixture 1 and mixture 2 into two die heads of a twin-die-head extruder respectively, extruding through a two-layer die, and cooling the mixture 1 and mixture 2 on a casting roller to finally mix and form a film; subjecting the resulting film to a stretching treatment, and then extracting a pore-forming agent using a solvent, and drying the pore-forming agent to obtain a porous substrate intermediate that contain pores; subjecting the resulting porous substrate intermediate to a second stretching treatment, and then to a heat-setting treatment, to obtain a porous substrate.

Optionally, the first pore-forming agent and the second pore-forming agent may each independently include one or more of paraffin oil or white oil.

Optionally, the molecular weights of the first pore-forming agent and the second pore-forming agent may each independently be 200 to 1500. A pore-forming agent falling within this molecular weight range can achieve a more satisfactory pore-forming effect of this application, thereby improving the cycle performance of the electrochemical device.

Optionally, the weight-average molecular weight of the first polymer particles may be 700,000 to 1,400,000, or optionally 1,200,000 to 1,400,000.

Optionally, the weight-average molecular weight of the second polymer particles may be 200,000 to 600,000, or optionally 300,000 to 500,000.

The weight-average molecular weight of the first polymer particles and the weight-average molecular weight of the second polymer particles may be measured using gel permeation chromatography (GPC).

Optionally, the mass ratio of the first pore-forming agent to the first polymer particles may be 65:35 to 80:20. As the mass ratio of the first pore-forming agent to the first polymer particles increases, the pore size of the porous substrate becomes larger under the same preparation process conditions. As the mass ratio of the first pore-forming agent to the first polymer particles decreases, the pore size of the porous substrate becomes smaller under the same preparation process conditions.

Optionally, the mass ratio of the second pore-forming agent to the second polymer particles may be 65:35 to 80:20. As the mass ratio of the second pore-forming agent to the second polymer particles increases, the pore size of the porous substrate becomes larger under the same preparation process conditions. As the mass ratio of the second pore-forming agent to the second polymer particles decreases, the pore size of the porous substrate becomes smaller under the same preparation process conditions.

Optionally, the mass ratio of the first polymer particles to the second polymer particles may be 45:55 to 25:75.

A screw temperature of the twin-die-head extruder may be 180 °C to 220 °C.

A cooling temperature of the casting roller of the twin-die-head extruder may be 60 °C to 90 °C.

Optionally, the step of subjecting the resulting film to a stretching treatment includes transverse stretching and longitudinal stretching, for example, may be simultaneous transverse and longitudinal stretching, transverse stretching followed by longitudinal stretching, or longitudinal stretching followed by transverse stretching.

Optionally, the transverse stretching may be performed at a stretch ratio of 5-fold to 8-fold, and further optionally 6-fold to 7-fold.

Optionally, the longitudinal stretching may be performed at a stretch ratio of 5-fold to 8-fold, and further optionally 6-fold to 7-fold.

As the stretch ratio increases, the pore size of the porous substrate becomes larger under the same preparation process conditions. As the stretch ratio decreases, the pore size of the porous substrate becomes smaller under the same preparation process conditions.

The temperature at which the resulting film undergoes the stretching treatment may be 105 °C to 115 °C. The transverse stretching temperature and the longitudinal stretching temperature may be the same or different.

Optionally, a solvent for extracting the pore-forming agent may include dichloromethane.

Optionally, the step of subjecting the resulting porous substrate intermediate to a second stretching treatment includes transverse stretching and longitudinal stretching, for example, may be simultaneous transverse and longitudinal stretching, transverse stretching followed by longitudinal stretching, or longitudinal stretching followed by transverse stretching.

Optionally, the transverse stretching may be performed at a stretch ratio of 1-fold to 2-fold.

Optionally, the longitudinal stretching may be performed at a stretch ratio of 1-fold to 2-fold.

As the stretch ratio of the second stretch increases, the pore size of the porous substrate becomes larger under the same preparation process conditions. As the stretch ratio of the second stretch decreases, the pore size of the porous substrate becomes smaller under the same preparation process conditions.

The temperature at which the resulting porous substrate intermediate undergoes the second stretching treatment may be 105 °C to 115 °C.

Optionally, the heat-setting may be performed at a temperature of 108 °C to 115 °C.

As the heat-setting temperature increases, the pore size of the porous substrate becomes smaller under the same preparation process conditions. As the heat-setting temperature decreases, the pore size of the porous substrate becomes larger under the same preparation process conditions.

Optionally, the heat-setting may be performed for a duration of 20 seconds to 40 seconds.

As the heat-setting duration increases, the pore size of the porous substrate becomes smaller under the same preparation process conditions. As the heat-setting duration decreases, the pore size of the porous substrate becomes larger under the same preparation process conditions.

In some embodiments, the thickness of the porous coating may be 2 µm to 10 µm, for example, may be 2 µm, 3 µm, 4 µm, 5 µm, 6 µm, 7 µm, 8 µm, 9 µm, 10 µm, or a value falling within a range formed by any two thereof. The thickness of the porous coating refers to a thickness of the porous coating on a single side of the porous substrate.

The porous coating includes filler particles and a binder. By adjusting the thickness of the porous coating to fall within the above range, this application improves the thermal stability of the separator, reduces the degree of thermal shrinkage of the separator, and increases the energy density of the electrochemical device.

In some embodiments, the mass percentage of the filler particles in the porous coating may be 85 wt% to 98 wt%, for example, may be 85 wt%, 86 wt%, 87 wt%, 88 wt%, 89 wt%, 90 wt%, 91 wt%, 92 wt%, 93 wt%, 94 wt%, 95 wt%, 96 wt%, 97 wt%, 98 wt%, or a value falling within a range formed by any two thereof.

In some embodiments, the mass percentage of the binder in the porous coating may be 2 wt% to 15 wt%, for example, may be 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, or a value falling within a range formed by any two thereof.

By adjusting the mass percentages of the filler particles and binder in the porous coating to fall within the above ranges, it is convenient to adjust the pore size and pore size distribution of the separator, thereby improving the thermal stability of the separator, reducing the degree of thermal shrinkage of the separator, and improving the bonding strength between the filler particles within the porous coating as well as the bonding strength between the porous coating and the porous substrate.

Under the same preparation process conditions, as the content of the binder increases, the minimum pore size of the separator becomes larger. Under the same preparation process conditions, as the content of the binder decreases, the minimum pore size of the separator becomes smaller.

In some embodiments, the filler particles may include at least one of organic particles or inorganic particles.

In some embodiments, the organic particles may include vinylidene fluoride-based resin particles such as polyvinylidene fluoride (PVDF).

In some embodiments, an aspect ratio of the organic particles may be (1 to 1.5):1.

By adjusting the aspect ratio of the organic particles to fall within the above range, it is convenient to adjust the pore size and pore size distribution of the separator, thereby improving the thermal stability of the separator and reducing the degree of thermal shrinkage of the separator. Moreover, this configuration can fully utilize the adhesiveness of the organic particles, improve the bonding strength between the filler particles within the porous coating as well as the bonding strength between the porous coating and the porous substrate, thereby reducing the impedance of the separator and improving the low-temperature cycle performance of the electrochemical device.

In some embodiments, the volume distribution particle sizes of the organic particles may be as follows: Dv50 is 0.8 µm to 2 µm, Dv90 is 1.5 µm to 4 µm, and Dv10 is 0.1 µm to 1.8 µm.

By adjusting the volume distribution particle size of the organic particles to fall within the above range, it is convenient to adjust the pore size and pore size distribution of the separator, thereby facilitating the flow of the electrolyte, improving the thermal stability of the separator, reducing the degree of thermal shrinkage of the separator, and in turn, striking a better balance between the low-temperature cycle performance and the high-temperature stability of the electrochemical device.

In some embodiments, an aspect ratio of the inorganic particles may be (2 to 5):1.

By adjusting the aspect ratio of the inorganic particles to fall within the above range, it is convenient to adjust the pore size and pore size distribution of the separator, thereby improving the thermal stability of the separator, reducing the degree of thermal shrinkage of the separator, and in turn, improving the low-temperature cycle performance of the electrochemical device.

In some embodiments, the inorganic particles may include ceramic particles, and the volume distribution particle sizes of the inorganic particles may be as follows: Dv50 is 1 µm to 4 µm, Dv90 is 2 µm to 6 µm, and Dv10 is 0.6 µm to 1.2 µm.

By adjusting the volume distribution particle size of the inorganic particles to fall within the above range, it is convenient to adjust the pore size and pore size distribution of the separator, thereby facilitating the flow of the electrolyte, improving the thermal stability of the separator, reducing the degree of thermal shrinkage of the separator, and in turn, striking a better balance between the low-temperature cycle performance and the high-temperature stability of the electrochemical device.

Dv10 is a particle diameter of the material corresponding to a cumulative volume percentage 10% in a volume-based particle size distribution curve as viewed from a small-diameter side; Dv50 is a particle diameter of the material corresponding to a cumulative volume percentage 50% in a volume-based particle size distribution curve as viewed from a small-diameter side; and Dv90 is a particle diameter of the material corresponding to a cumulative volume percentage 90% in a volume-based particle size distribution curve as viewed from a small-diameter side.

In some embodiments, the ceramic may include, but is not limited to, at least one of aluminum oxide, boehmite, titanium dioxide, silicon dioxide, zirconium dioxide, tin dioxide, magnesium hydroxide, magnesium oxide, zinc oxide, barium sulfate, boron nitride, or aluminum nitride.

In some embodiments, the binder in the porous coating may be in particulate shape or film-shaped.

Optionally, the aspect ratio of the particulate binder may be (1 to 1.5):1.

Optionally, the volume distribution particle size Dv50 of the particulate binder may be 0.8 µm to 2 µm.

In some embodiments, the binder may include a copolymer containing at least two structural units. The at least two structural units are all derived from monomers containing an unsaturated double bond. Of the monomers containing an unsaturated double bond, at least one contains an ester group, and at least one contains no ester group.

The monomer containing an ester group improves the lyophilicity of the separator, thereby improving the low-temperature cycle performance of the electrochemical device, but reducing the heat resistance of the separator.

By making the comonomers of the binder include both an ester-group-containing monomer and a non-ester-group-containing monomer, this application makes the separator superior in both lyophilicity and heat resistance, thereby further improving the low-temperature cycle performance and high-temperature stability of the electrochemical device. The monomer containing an ester group may include at least one of methyl methacrylate, ethyl methacrylate, isooctyl acrylate, n-propyl acrylate, butyl acrylate, cyclohexyl acrylate, or 2-hydroxyethyl acrylate. By adjusting the types of the monomers containing an ester group to fall within the above range, this application further improves the lyophilicity of the separator.

The monomer containing no ester group may include at least one of styrene, butadiene, methacrylamide, acrylamide, or acrylonitrile, or optionally, include styrene.

By adjusting the types of the monomers containing no ester group to fall within the above range, this application further improves the heat resistance of the separator.

In some embodiments, the binder may include a copolymer formed from the following three monomers: styrene, methyl methacrylate, and isooctyl acrylate. Based on a total mass of the three monomers being 100 parts, a mass of styrene is 75 parts to 90 parts, a mass of the methyl methacrylate is 2 parts to 5 parts, and a remainder is isooctyl acrylate.

This configuration improves the low-temperature cycle performance and high-temperature stability of the electrochemical device.

In some embodiments, the binder may include a copolymer formed from the following two monomers: styrene and butyl acrylate, and a mass ratio between the two monomers may be (1 to 5):1, or optionally (2 to 4):1.

This configuration improves the low-temperature cycle performance and high-temperature stability of the electrochemical device.

In some embodiments, the weight-average molecular weight of the binder may be 800,000 to 1,800,000.

The weight-average molecular weight of the binder may be measured using gel permeation chromatography (GPC).

In some embodiments, the porous coating may further include a dispersant.

In some embodiments, the dispersant may include at least one of polyethylene glycol, a polyvinyl alcohol-based compound, or sodium dodecylbenzene sulfonate.

In some embodiments, the mass percentage of the dispersant in the porous coating may be less than or equal to 2 wt%.

By incorporating a small amount of dispersant into the porous coating, this application improves the thickness uniformity of the porous coating, and alleviates the problem of purple-spot lithium plating on the negative electrode, thereby improving the low-temperature cycle performance of the electrochemical device.

A preparation method of the porous coating may include the following steps: applying a porous coating slurry onto at least one side of a porous substrate, and drying the slurry to form a porous coating. The porous coating slurry includes filler particles, a binder, and a solvent.

In some embodiments, the solvent in the porous coating slurry may include water.

In some embodiments, a solid content of the porous coating slurry may be 30% to 50%.

As the solid content of the porous coating slurry increases, the pore size of the separator becomes smaller under the same preparation process conditions. As the solid content of the porous coating slurry decreases, the pore size of the separator becomes larger under the same preparation process conditions.

In some embodiments, a viscosity of the porous coating slurry may be 25 mPa·s to 35 mPa·s.

As the viscosity of the porous coating slurry increases, the pore size of the separator becomes smaller under the same preparation process conditions. As the viscosity of the porous coating slurry decreases, the pore size of the separator becomes larger under the same preparation process conditions.

In some embodiments, the drying process for the porous coating slurry may be vacuum drying.

In some embodiments, the drying temperature for the porous coating slurry may be 30 °C to 80 °C.

In some embodiments, a porosity of the separator subjected to heating at 130 °C for 1 hour may be 30% to 60%.

In some embodiments, a transverse direction (TD) heat shrink ratio of the separator subjected to heating at 130 °C for 1 hour may be less than or equal to 4%, or optionally less than or equal to 3%.

In some embodiments, a machine direction (MD) heat shrink ratio of the separator subjected to heating at 130 °C for 1 hour may be less than or equal to 4%, or optionally less than or equal to 3%.

In some embodiments, an areal density of the separator may be 1 g/m² to 5 g/m².

In some embodiments, a total thickness of the separator may be 10 µm to 17 µm.

Adjusting the total thickness of the separator to fall within the above range is conducive to improving both the puncture resistance of the separator and the energy density of the electrochemical device.

A preparation method of the separator may include the following steps: applying a porous coating slurry onto at least one side of a porous substrate, and drying the slurry to obtain a separator.

### Electrochemical device

According to a second aspect, this application provides an electrochemical device. The electrochemical device includes any device in which an electrochemical reaction occurs to implement conversion between chemical energy and electrical energy. Specific examples of the electrochemical device include all kinds of lithium primary batteries or lithium secondary batteries. Particularly, the lithium secondary battery includes a lithium-ion secondary battery.

During the use of the electrochemical device, oxidation and reduction reactions of electrode active materials occur along with charging and discharging. A negative electrode is an electrode on which a reaction occurs that absorbs or lithiates lithium ions during charging and that releases or delithiates lithium ions during discharging. A positive electrode is an electrode on which a reaction occurs that releases or delithiates lithium ions during charging and that absorbs or lithiates lithium ions during discharging.

In some embodiments, the electrochemical device may include a positive electrode plate, a negative electrode plate, an electrolyte, and a separator. The separator is located between the positive electrode plate and the negative electrode plate. The separator used in the electrochemical device is the separator provided in an embodiment of this application in the first aspect. Therefore, the electrochemical device provided in an embodiment of this application can be superior in both low-temperature cycle performance and high-temperature stability.

The positive electrode plate, the negative electrode plate, and the separator may be made into an electrode assembly by winding or stacking.

The electrochemical device further includes an outer package configured to package the electrode assembly and the electrolyte. In some embodiments, the outer package may be a hard shell such as a hard plastic shell, an aluminum shell, a steel shell, or the like; or, may be a soft package such as a pouch-type package. The soft package may be made of a material, for example, at least one of an aluminum laminated film, polypropylene (PP), polybutylene terephthalate (PBT), or polybutylene succinate (PBS).

The electrolyte may include an electrolyte salt and a solvent. The electrolyte salt contains lithium ions. The types of the electrolyte salt and the solvent are not particularly limited, and may be selected as required.

In some embodiments, the electrolyte salt may include, but is not limited to, at least one of lithium hexafluorophosphate (LiPF₆), lithium perchlorate (LiClO₄), lithium tetrafluoroborate (LiBF₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), or lithium bis(oxalato)borate (LiBOB). The above electrolyte salts may be used individually, or two or more thereof may be used in combination.

In some embodiments, the solvent may include at least one of a carbonate ester compound, a carboxylate ester compound, an ether compound, or a sulfone compound. As an example, the solvent may include, but is not limited to, at least one of ethylene carbonate (EC), fluoroethylene carbonate (FEC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), γ-butyrolactone, sulfolane (SF), dimethyl sulfone (MSM), ethyl methyl sulfone (EMS), diethyl sulfone (ESE), methyl sulfolane, dimethyl sulfoxide, 2-methyltetrahydrofuran, 1,3-dioxolane, 4-methyl-1,3-dioxolane, 1,2-dimethoxyethane, 1,2-diethoxyethane, dimethyl ether, diethyl ether, nitromethane, or N,N-dimethylformamide. The above solvents may be used individually, or two or more thereof may be used in combination.

In some embodiments, the electrolyte may further contain an additive. Optionally, the electrolyte contains 1,3-propane sultone and ethylene sulfate. A mass fraction of the 1,3-propane sultone in a total mass of the electrolyte is A, a mass fraction of the ethylene sulfate in the total mass of the electrolyte is B, satisfying: 2.0 ≤ A/B ≤ 8.0. For example, A/B may be 2.0, 2.5, 3.0, 3.5, 3.75, 4.0, 4.25, 4.5, 4.75, 5.0, 5.5, 5.75, 6.0, 6.25, 6.5, 6.75, 7.0, 7.25, 7.5, 8.0, or a value falling within a range formed by any two thereof. When the ratio between the 1,3-propane sultone and the ethylene sulfate is adjusted to satisfy the range specified herein, a synergistic effect occurs between the two additives. In this way, during the cycling of the electrochemical device, a structurally stable and uniform solid electrolyte interphase (SEI) film with a thickness of several tens of nanometers can be formed on a surface of a positive active material. The formation of the SEI film can reduce the oxidative decomposition of the electrolyte. In addition, by capturing gas molecules on the interface, the film can reduce the temperature rise of the electrochemical device under a fast-charge test, thereby improving the fast-charge performance and high-temperature cycle stability of the electrochemical device.

Optionally, 3.5 ≤ A/B ≤ 7.25. By further adjusting the ratio between 1,3-propane sultone and ethylene sulfate, this application more effectively reduces the temperature rise of the electrochemical device under a fast-charge test, and improves the fast-charge performance and high-temperature cycle stability of the electrochemical device.

Further optionally, 4.0 ≤ A/B ≤ 6.5. By further adjusting the ratio between 1,3-propane sultone and ethylene sulfate, this application more effectively reduces the temperature rise of the electrochemical device under a fast-charge test, and improves the fast-charge performance and high-temperature cycle stability of the electrochemical device.

Optionally, the mass fraction of 1,3-propane sultone in the total mass of the electrolyte is 1.6% to 6.4%, optionally 2.8% to 5.8%, or further optionally 3.2% to 5.2%.

The electrolyte may be prepared using a conventional method in this field. An exemplary method includes: mixing well a solvent, an electrolyte salt, and optionally an additive, and other components to obtain an electrolyte. The order of adding the materials is not particularly limited. For example, an electrolyte salt and optionally an additive and other components are added into a solvent, and mixed well to obtain an electrolyte.

The constituents of the electrolyte and contents thereof may be determined by using a conventional method in the art. For example, the constituents and the contents thereof may be detected by using a gas chromatography mass spectrometry (GC-MS) instrument, ion chromatography (IC), liquid chromatography (LC), or the like.

### [Positive electrode plate]

The material, composition, and manufacturing method of the positive electrode plate may include any technology well-known in the prior art.

In some embodiments, the positive electrode plate may include a positive current collector and a positive active material layer disposed on at least one side of the positive current collector.

In some embodiments, the shape of the positive current collector may be plate-shaped or foil-shaped, which is not limited herein.

In some embodiments, the thickness of the positive current collector may be 6 µm to 25 µm.

In some embodiments, the material of the positive current collector is not particularly limited, and may be a material that is electronically conductive. For example, the material may be an elemental substance or an alloy (such as stainless steel) containing at least one of C, Ti, Cr, Mo, Ru, Rh, Ta, W, Os, Ir, Pt, Au, or Al.

From the viewpoint of high conductivity, high stability in an electrolyte, and high oxidation resistance, the material is optionally carbon layer, aluminum foil, stainless steel foil, or the like. From the viewpoint of further reducing production cost, the material is optionally aluminum foil. A person skilled in the art may adjust the material as appropriate.

The positive active material layer includes a positive active material. The positive active material may be a material capable of absorbing and releasing lithium.

Specific types of the positive active material are not limited, and may be selected as required. As examples, the positive active material may include, but is not limited to, at least one of lithium iron phosphate (LiFePO₄), lithium manganese phosphate (LiMnPO₄), lithium cobalt phosphate (LiCoPO₄), iron pyrophosphate (Li₂FeP₂O₇), lithium cobalt oxide (LiCoO₂), spinel-type lithium manganese oxide (LiMn₂O₄), spinel-type lithium nickel manganese oxide, layered lithium manganese oxide (LiMnO₂), lithium nickel oxide (LiNiO₂), lithium niobium oxide (LiNbO₂), lithium ferrite (LiFeO₂), lithium magnesium oxide (LiMgO₂), lithium calcium oxide (LiCaO₂), lithium copper oxide (LiCuO₂), lithium zinc oxide (LiZnO₂), lithium molybdenum oxide (LiMoO₂), lithium tantalum oxide (LiTaO₂), lithium tungsten oxide (LiWO₂), lithium nickel cobalt aluminum oxide, lithium nickel cobalt manganese oxide, a lithium-rich material (such as lithium-rich nickel cobalt manganese oxide), manganese oxide (MnO₂), vanadium oxide, sulfur oxide, silicate oxide, or a modified compound thereof. Such materials may be used individually, or two or more thereof may be used in combination.

Optionally, the positive active material may include at least one of lithium iron phosphate (LiFePO₄), lithium cobalt oxide (LiCoO₂), lithium nickel cobalt aluminum oxide, lithium nickel cobalt manganese oxide, spinel-type lithium nickel manganese oxide, or a modified compound thereof.

As an example, the molecular formula of the lithium nickel cobalt aluminum oxide may be LiNiₓCo_{y}Al_{1-x-y}O₂, where 0 < x < 1, 0 < y < 1, and 0 < x + y < 1. For example, the molecular formula may include, but is not limited to, LiNi_{0.8}Co_{0.15}Al_{0.05}O₂.

As an example, the molecular formula of the lithium nickel cobalt manganese oxide may be LiNiₓCo_{y}Mn_{1-x-y}O₂, where 0 < x < 1, 0 < y < 1, and 0 < x + y < 1. For example, the molecular formula may include, but is not limited to, at least one of LiNi_{1/3}Co_{1/3}Mn_{1/3}O₂, LiNi_{0.5}Co_{0.2}Mn_{0.3}O₂, LiNi_{0.6}Co_{0.2}Mn_{0.2}O₂, or LiNi_{0.8}Co_{0.1}Mn_{0.1}O₂.

As an example, the spinel-type lithium nickel manganese oxide may include, but is not limited to, LiNi_{0.5}Mn_{1.5}O₄.

The modified compound of each of the above positive active materials may be formed by modification of the positive active material, where the modification is doping, surface coating, or both doping and coating.

In some embodiments, the powder volume resistivity of the positive active material at 15 MPa may be 100 KΩ·cm to 450 KΩ·cm, for example, 100 KΩ·cm, 150 KΩ·cm, 200 KΩ·cm, 250 KΩ·cm, 300 KΩ·cm, 350 KΩ·cm, 400 KΩ·cm, 450 KΩ·cm, or a value falling within a range formed by any two thereof. When the positive active material exhibits a powder volume resistivity satisfying this range, the migration rate of lithium ions between the positive electrode and the negative electrode can be kept at an appropriate level, thereby effectively improving the low-temperature cycle performance of the electrochemical device.

The powder volume resistivity of the positive active material at 15 MPa may be measured using the four-point probe method. An exemplary measurement method may include the following steps: Taking 2 g of active material powder as a specimen, and placing the specimen into a specimen stage; applying a 15 MPa pressure onto the powder using a mechanical press; and reading the test result through a powder resistivity meter after the pressure stabilizes.

The specimen of the positive active material may be obtained as follows: Fully discharging an electrochemical device, disassembling the electrochemical device and taking out a positive electrode plate; drying the positive electrode plate, scraping an appropriate amount of powder from a positive current collector using a scraper; drying the scraped powder, and then taking an appropriate amount of the powder for testing the powder volume resistivity.

In some embodiments, the porosity of the positive active material layer may be 20% to 35%.

In some embodiments, a thickness of the positive active material layer may be 15 µm to 150 µm, but is not particularly limited herein. The thickness of the positive active material layer means a thickness of the positive active material layer on a single side of the positive current collector.

In some embodiments, the positive active material layer may include a positive conductive agent. The positive conductive agent may include conductive carbon powder. As an example, the positive conductive agent may include, but is not limited to, at least one of conductive carbon black, acetylene black (AB), Ketjen black (KB), graphite, carbon fiber, carbon tubes, graphene, amorphous carbon, hard carbon, soft carbon, glassy carbon, carbon nanofiber, or carbon nanotubes (CNT). Such materials may be used individually, or two or more thereof may be used in combination.

In some embodiments, the positive active material layer may include a positive electrode binder. The positive electrode binder may include, but is not limited to, at least one of polyvinylidene fluoride (PVDF), polytetrafluoroethylene (PTFE), poly(vinylidene fluoride-co-tetrafluoroethylene-co-propylene), poly(vinylidene fluoride-co-hexafluoropropylene-co-tetrafluoroethylene), poly(tetrafluoroethylene-co-hexafluoropropylene), or polyvinyl alcohol (PVA).

The positive electrode plate may be prepared by a conventional method in this field. A general method for preparing the positive electrode plate includes: dispersing a positive active material and optionally a positive conductive agent, a positive electrode binder and the like in a solvent to form a positive electrode slurry, applying the positive electrode slurry onto a positive current collector, and performing steps such as oven-drying and compaction to obtain a positive electrode plate. The solvent in this application may be, but is not limited to, N-methyl-pyrrolidone (NMP).

The slurry may be applied in a coating manner known in the art, such as extrusion coating, gravure coating, micro-gravure coating, electrospraying, or transfer coating, which is not limited herein.

### [Negative electrode plate]

The material, composition, and manufacturing method of the negative electrode plate may include any technology well-known in the prior art.

In some embodiments, the negative electrode plate may include a negative current collector and a negative active material layer disposed on at least one side of the negative current collector.

In some embodiments, the shape of the negative current collector may be plate-shaped or foil-shaped, which is not limited herein.

In some embodiments, the thickness of the negative current collector may be 4 µm to 25 µm.

In some embodiments, the material of the negative current collector is not particularly limited, and may be a material of high electronic conductivity. For example, the material may be an elemental substance or alloy (such as stainless steel) containing at least one of C, Cu, Ni, Fe, V, Nb, Ti, Cr, Mo, Ru, Rh, Ta, W, Os, Ir, Pt, Au, or Ag, or may be a composite material formed by plating a conductive material with a different conductive material, for example, by plating Fe with Cu.

From the viewpoint of high conductivity, high stability in an electrolyte, and high oxidation resistance, the material is optionally copper foil, nickel foil, stainless steel foil, or the like. From the viewpoint of further reducing production cost, the material is optionally copper foil or nickel foil. A person skilled in the art may adjust the material as appropriate.

The negative active material layer includes a negative active material. The negative active material may include at least one of a carbon material or a silicon-based material.

The mass percentage of the silicon-based material in the negative active material may be 0% to 25%. The mass percentage 0% of the silicon-based material means that the negative active material contains no silicon-based material.

As an example, the carbon material may include natural graphite, artificial graphite, or a mixture thereof.

As an example, the silicon-based material may include at least one of elemental silicon, an oxide of silicon, a silicon-carbon composite material, or a silicon alloy.

In some embodiments, a porosity of the negative active material layer may be 25% to 45%.

In some embodiments, a thickness of the negative active material layer may be 30 µm to 150 µm, but is not particularly limited herein. The thickness of the negative active material layer means a thickness of the negative active material layer on a single side of the negative current collector.

In some embodiments, the negative active material layer may include a negative conductive agent. The negative conductive agent may include conductive carbon powder. As an example, the negative conductive agent may include, but is not limited to, at least one of conductive carbon black, acetylene black (AB), Ketjen black (KB), graphite, carbon fiber, carbon tubes, graphene, amorphous carbon, hard carbon, soft carbon, glassy carbon, carbon nanofiber, or carbon nanotubes (CNT). Such materials may be used individually, or two or more thereof may be used in combination.

In some embodiments, the negative active material layer may include a negative electrode binder. The negative electrode binder may include, but is not limited to, at least one of styrene-butadiene rubber (SBR), acrylonitrile multicomponent copolymer (for example, LA-type aqueous binder, optionally LA132 or LA133), polyacrylic acid (PAA) or a salt of PAA, styrene-acrylic resin, polyvinyl alcohol (PVA), or a derivative thereof. The derivative typically means a product derived by substituting a hydrogen atom or atomic group in a polymer with another atom or atomic group.

In some embodiments, the negative active material layer may further include a negative electrode dispersant to improve the film formation quality of the negative active material layer. For example, the negative electrode dispersant may include, but is not limited to, at least one of sodium carboxymethyl cellulose (CMC) or a derivative thereof. The derivative typically means a product derived by substituting a hydrogen atom or atomic group in a polymer with another atom or atomic group (such as amino group).

The negative electrode plate may be prepared by a conventional method in this field. A typical method for preparing the negative electrode plate includes: Dispersing a negative active material, and optionally a negative conductive agent, a negative electrode binder, a negative electrode dispersant, and the like in a solvent to form a negative electrode slurry, applying the negative electrode slurry onto a negative current collector, and performing steps such as oven-drying and compaction to obtain a negative electrode plate. The solvent may include, but is not limited to, at least one of water, ethanol, acetone, butanone, dimethylformamide, N-methylpyrrolidone, diethylformamide, dimethyl sulfoxide, or tetrahydrofuran.

The slurry may be applied in a coating manner known in the art, such as extrusion coating, gravure coating, micro-gravure coating, electrospraying, or transfer coating, which is not limited herein.

The negative electrode plate provided herein does not exclude other additional functional layers different from the negative active material layer. For example, in some embodiments, the negative electrode plate may further include a conductive primer (for example, formed of a conductive agent and a binder) disposed on a surface of the negative current collector and sandwiched between the negative current collector and the negative active material layer. In some embodiments, the negative electrode plate may further include a protection layer that overlays the surface of the negative active material layer.

### Electronic device

According to a third aspect, an embodiment of this application further provides an electronic device. The electronic device includes the electrochemical device according to an embodiment of this application in the second aspect.

The electronic device provided in this embodiment of this application is not particularly limited herein, and may be any electronic device known in the prior art. In some embodiments, the types of the electronic device may include, but are not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, lithium-ion capacitor, or the like.

### Embodiments

The following embodiments are more detailed descriptions of the subject-matter disclosed herein. The embodiments are merely intended as illustrative descriptions because, evidently, a person skilled in the art may make various modifications and changes to such embodiments without departing from what is disclosed herein. Unless otherwise specified, all fractions, percentages, and ratios mentioned in the following embodiments are values by mass. All reagents used in the embodiments are commercially available or can be synthesized according to conventional methods, and can be directly put into use without a need of further processing. All the instruments used in the embodiments are commercially available.

### Performance Test

### (1) Test of a volume-based distribution particle size of filler particles

Testing the volume-based distribution particle sizes of filler particles with reference to GB/T 19077-2016, where the test instrument may be a laser particle size analyzer, such as Mastersizer 3000 laser particle size analyzer manufactured by Malvern Instruments Ltd., UK.

Dv10 is a particle diameter of the material corresponding to a cumulative volume percentage 10% in a volume-based particle size distribution curve as viewed from a small-diameter side; Dv50 is a particle diameter of the material corresponding to a cumulative volume percentage 50% in a volume-based particle size distribution curve as viewed from a small-diameter side; and Dv90 is a particle diameter of the material corresponding to a cumulative volume percentage 90% in a volume-based particle size distribution curve as viewed from a small-diameter side.

### (2) Test of a pore size of a separator

A pore size distribution curve of the separator may be obtained using a pore size tester, so as to obtain a maximum pore size Dₘₐₓ, a minimum pore size Dₘᵢₙ, an average pore size D_{avg} of the separator, and a proportion of a total pore area of the pores with a pore size of 30 nm to 45 nm to a total pore area of the separator. The instrument model is CFP-1500AE lithium membrane through-pore tester. The infiltration liquid is GalWick. The separator specimen is a circular disc with a diameter of 24 mm.

### (3) Test of a heat shrink ratio of a separator

Cutting a separator into a specimen measuring 70 mm in the MD direction and 50 mm in the TD direction, and fixing four corners of the specimen onto a piece of paper with adhesive tape, and then placing the specimen into a 130 °C oven and baking the specimen for 1 hour. After completion of the baking, taking out the specimen, and measuring the length L₁ in the MD direction and the length L₂ in the TD direction of the separator.

Heat shrink ratio of the separator in the MD direction = (70 - L₁)/70 × 100%.

Heat shrink ratio of the separator in the TD direction = (50 - L₂)/50 × 100%.

To ensure accuracy of the test results, 5 specimens may be taken for testing in each embodiment and each comparative embodiment, and the measured values are averaged out as a test result.

### (4) Test of a porosity of a separator subjected to heating at 130 °C for 1 hour

Cutting a separator into a specimen measuring 70 mm in the MD direction and 50 mm in the TD direction, fixing four corners of the specimen onto a piece of paper with adhesive tape, and then placing the specimen into a 130 °C oven and baking it for 1 hour. After completion of the baking, taking out the separator and determining the porosity of the separator,

where the porosity of the separator is determined using a true density tester. The heated separator is die-cut into a specimen of a regular shape, and is placed on the true density tester for testing to obtain a true volume of the separator. Measuring the length, width, and height of the specimen with a ruler, from which an apparent volume of the separator is calculated. Porosity (%) of the separator = (apparent volume of the separator - true volume of the separator)/apparent volume of the separator × 100%. The test instrument is AccuPyc II 1340 true density tester.

### (5) Test of low-temperature cycle performance of a lithium-ion battery

Leaving a lithium-ion battery to stand at -10 °C for 60 minutes, and then charging the battery at a constant current rate of 2C until the battery reaches a full-charge voltage value 4.25 V, and then charging the battery at a constant voltage of 4.25 V until the current tapers off to a cutoff current value 0.02C. Leaving the battery to stand for 5 minutes, and then discharging the battery at a constant current rate of 0.5C until the voltage drops to 3.0 V, thereby completing one charge-discharge cycle. Recording the first-cycle discharge capacity. Repeating the above steps on the lithium-ion battery for 500 times, and recording the discharge capacity at the end of the 500 cycles.

Capacity retention rate of the lithium-ion battery cycled at -10 °C for 500 cycles = (discharge capacity after cycling for 500 cycles/first-cycle discharge capacity) × 100%.

### (6) Test of high-temperature cycle performance of a lithium-ion battery

Leaving a lithium-ion battery to stand at 45 °C for 60 minutes, and then charging the battery at a constant current rate of 2C until the battery reaches a full-charge voltage value 4.25 V, and then charging the battery at a constant voltage of 4.25 V until the current tapers off to a cutoff current value 0.02C. Leaving the battery to stand for 5 minutes, and then discharging the battery at a constant current rate of 0.5C until the voltage drops to 3.0 V, thereby completing one charge-discharge cycle. Recording the first-cycle discharge capacity. Repeating the above steps on the lithium-ion battery for 450 times, and recording the discharge capacity at the end of the 450 cycles.

Capacity retention rate of the lithium-ion battery cycled at 45 °C for 450 cycles = (discharge capacity after cycling for 450 cycles/first-cycle discharge capacity) × 100%.

### (7) Thermal oven performance test for a lithium-ion battery

Charging a lithium-ion battery at a constant current rate of 0.5C in a 25 °C environment until the voltage reaches a full-charge voltage value 4.25 V, and then charging the battery at a constant voltage of 4.25 V until the current tapers off to a cutoff current of 0.02C such that the battery enters a fully charged state. Checking the appearance of the battery to ensure that the lithium-ion battery is in a normally available state. Placing the fully charged battery into a thermal oven, and increasing the ambient temperature in the oven at a rate of 5 °C/min until a specified thermal oven test temperature 130 °C, and holding isothermally for one hour, during which the status of the lithium-ion battery is observed.

The criterion for the lithium-ion battery passing the thermal oven test is: the lithium-ion battery neither catches fire nor explodes.

Thermal oven test pass rate = number of lithium-ion batteries that pass the thermal oven test/total number of lithium-ion batteries

### (8) Test of fast-charge temperature rise of a lithium-ion battery

Fast-charging a lithium-ion battery in a 25 °C environment. First, charging the battery at a constant current rate of 8C until the voltage reaches a full-charge voltage value 4.25 V, and then charging the battery at a constant voltage of 4.25 V until the current tapers off to a cutoff current value 0.02C. Monitoring the surface temperature rise of the lithium-ion battery during the fast charge, and recording the maximum temperature rise value.

### Embodiment 1-1

### (1) Preparation of a separator

### Preparation of a porous substrate

Mixing paraffin oil and PE particles with a weight-average molecular weight of 1,200,000 to 1,400,000 at an oil-to-material mass ratio of 65:35 to obtain a mixture 1.

Mixing paraffin oil and PE particles with a weight-average molecular weight of 300,000 to 500,000 at an oil-to-material mass ratio of 65:35 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 1.5-fold in the transverse direction at 110 °C for a second time, and then heat-setting and winding up the porous substrate intermediate at 115 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### (2) Preparation of a negative electrode plate

Mixing artificial graphite, acetylene black, styrene-butadiene rubber, and sodium carboxymethyl cellulose at a mass ratio of 96:1:1.5:1.5, and then adding deionized water as a solvent to formulate a slurry in which the solid content is 70%, and stirring well. Applying the slurry evenly onto one surface of 8 µm-thick copper foil, and drying at 110 °C. Cold-pressing the foil to obtain a negative electrode plate coated with a 150 µm-thick negative active material layer on a single side. Subsequently, repeating the above steps on the other surface of the copper foil to obtain a negative electrode plate coated on both sides. Cutting the negative electrode plate into a size of 80 mm × 880 mm, and welding tabs so that the electrode plate is ready for later use.

### (3) Preparation of a positive electrode plate

Mixing LiCoO₂, acetylene black, and polyvinylidene fluoride (PVDF) at a mass ratio of 94:3:3, and then adding N-methyl-pyrrolidone (NMP) as a solvent to formulate a slurry in which the solid content is 75%, and stirring well. Applying the slurry evenly onto one surface of 12 µm-thick aluminum foil, and drying the slurry at 90 °C. Cold-pressing the foil to obtain a positive electrode plate coated with a 100 µm-thick positive active material layer on a single side. Subsequently, repeating the above steps on the other surface of the aluminum foil to obtain a positive electrode plate coated on both sides. Cutting the positive electrode plate into a size of 74 mm × 867 mm, and welding tabs so that the positive electrode plate is ready for later use.

### (4) Preparation of an electrolyte

Mixing ethylene carbonate (EC), diethyl carbonate (DEC), propylene carbonate (PC), propyl propionate (PP), and vinylene carbonate (VC) at a mass ratio of 20:30:20:28:2 in an environment with a water content less than 10 ppm, and then adding LiPF₆, and mixing well to obtain an electrolyte. The mass percentage of the LiPF₆ in the electrolyte is 8%.

### (5) Preparation of a lithium-ion battery

Stacking the positive electrode plate, separator, and negative electrode plate prepared above sequentially such that the porous coating of the separator is in contact with the positive electrode plate. Winding the stacked structure to obtain an electrode assembly. Placing the electrode assembly into an aluminum laminated film pouch, dehydrating at 80 °C, and then injecting the prepared electrolyte. Performing steps such as vacuum sealing, standing, hot pressing, formation, and shaping to obtain a pouch-type lithium-ion battery.

### Embodiment 1-2

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 68:32 to obtain a mixture 1.

Mixing paraffin oil and PE particles with a weight-average molecular weight of 300,000 to 500,000 at an oil-to-material mass ratio of 68:32 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 1.5-fold in the transverse direction at 110 °C for a second time, and then heat-setting and winding up the porous substrate intermediate at 115 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1.2 µm, Dv90 = 3.5 µm, Dv10 = 1 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 1-3

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 75:25 to obtain a mixture 1.

Mixing paraffin oil and PE particles with a weight-average molecular weight of 300,000 to 500,000 at an oil-to-material mass ratio of 75:25 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 1.5-fold in the transverse direction at 110 °C for a second time, and then heat-setting and winding up the porous substrate intermediate at 110 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1.5 µm, Dv90 = 3.5 µm, Dv10 = 1 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 1-4

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 77:23 to obtain a mixture 1.

Mixing paraffin oil and PE particles with a weight-average molecular weight of 300,000 to 500,000 at an oil-to-material mass ratio of 77:23 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 1.5-fold in the transverse direction at 110 °C for a second time, and then heat-setting and winding up the porous substrate intermediate at 110 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 92:8. The filler particles are boehmite particles, with volume distribution particle sizes as follows: Dv50 = 2 µm, Dv90 = 3.5 µm, Dv10 = 1 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 1-5

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 77:23 to obtain a mixture 1.

Mixing paraffin oil and PE particles with a weight-average molecular weight of 300,000 to 500,000 at an oil-to-material mass ratio of 77:23 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 1.5-fold in the transverse direction at 110 °C for a second time, and then heat-setting and winding up the porous substrate intermediate at 108 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 93:7. The filler particles are boehmite particles, with volume distribution particle sizes as follows: Dv50 = 1.2 µm, Dv90 = 1.5 µm, Dv10 = 0.5 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 1-6

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 80:20 to obtain a mixture 1.

Mixing paraffin oil and PE particles with a weight-average molecular weight of 300,000 to 500,000 at an oil-to-material mass ratio of 80:20 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 1.5-fold in the transverse direction at 110 °C for a second time, and then heat-setting and winding up the porous substrate intermediate at 110 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 85:15. The filler particles are boehmite particles, with volume distribution particle sizes as follows: Dv50 = 4 µm, Dv90 = 6 µm, Dv10 = 1.2 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 1-7

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 75:25 to obtain a mixture 1.

Mixing paraffin oil and PE particles with a weight-average molecular weight of 300,000 to 500,000 at an oil-to-material mass ratio of 75:25 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 1.5-fold in the transverse direction at 110 °C for a second time, and then heat-setting and winding up the porous substrate intermediate at 112 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1.2 µm, Dv90 = 3.5 µm, Dv10 = 1 µm, and with an aspect ratio of 2. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 1-8

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 65:35 to obtain a mixture 1.

Mixing paraffin oil and PE particles with a weight-average molecular weight of 300,000 to 500,000 at an oil-to-material mass ratio of 65:35 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 1.5-fold in the transverse direction at 110 °C for a second time, and then heat-setting and winding up the porous substrate intermediate at 115 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 90:10. The filler particles are boehmite particles, with volume distribution particle sizes as follows: Dv50 = 1.2 µm, Dv90 = 3.5 µm, Dv10 = 1 µm, and with an aspect ratio of 5. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 1-9

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 77:23 to obtain a mixture 1.

Mixing paraffin oil and PE particles with a weight-average molecular weight of 300,000 to 500,000 at an oil-to-material mass ratio of 77:23 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 7-fold in the machine direction (MD) and 7-fold in the transverse direction (TD) at 105 °C, and then performing extraction with dichloromethane at 25 °C for 0.6 hour, and drying to obtain a porous substrate intermediate.

Stretching the porous substrate intermediate 1.5-fold in the transverse direction at 110 °C for a second time, and then heat-setting and winding up the porous substrate intermediate at 113 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1.2 µm, Dv90 = 3.5 µm, Dv10 = 1 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 1-10

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 78:22 to obtain a mixture 1.

Mixing paraffin oil and PE particles with a weight-average molecular weight of 300,000 to 500,000 at an oil-to-material mass ratio of 78:22 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 1.5-fold in the transverse direction at 110 °C for a second time, and then heat-setting and winding up the porous substrate intermediate at 110 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 90:10. The filler particles are boehmite particles, with volume distribution particle sizes as follows: Dv50 = 1.2 µm, Dv90 = 3.5 µm, Dv10 = 1 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 1-11

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 80:20 to obtain a mixture 1.

Mixing paraffin oil and PE particles with a weight-average molecular weight of 300,000 to 500,000 at an oil-to-material mass ratio of 80:20 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 1.5-fold in the transverse direction at 110 °C for a second time, and then heat-setting and winding up the porous substrate intermediate at 110 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 3.5 µm, Dv90 = 5.5 µm, Dv10 = 1 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1.5, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 1-12

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 80:20 to obtain a mixture 1.

Mixing paraffin oil and PE particles with a weight-average molecular weight of 300,000 to 500,000 at an oil-to-material mass ratio of 80:20 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 1.5-fold in the transverse direction at 110 °C for a second time, and then heat-setting and winding up the porous substrate intermediate at 108 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 4 µm, Dv90 = 6 µm, Dv10 = 1 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Comparative Embodiment 1-1

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 55:45 to obtain a mixture 1.

Mixing paraffin oil and PE particles with a weight-average molecular weight of 300,000 to 500,000 at an oil-to-material mass ratio of 55:45 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 1.5-fold in the transverse direction at 110 °C for a second time, and then heat-setting and winding up the porous substrate intermediate at 115 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1.2 µm, Dv90 = 3.5 µm, Dv10 = 1 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1:0.7, and the Dv50 of the binder is 1 µm.

Applying the porous coating slurry to one side of the porous substrate, and vacuum-drying at 60°C to 70°C to obtain a separator. The thickness of the porous coating is 5 µm.

### Comparative Embodiment 1-2

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 85:15 to obtain a mixture 1.

Mixing paraffin oil and PE particles with a weight-average molecular weight of 300,000 to 500,000 at an oil-to-material mass ratio of 85:15 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 1.5-fold in the transverse direction at 110 °C for a second time, and then heat-setting and winding up the porous substrate intermediate at 115 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 5 µm, Dv90 = 7 µm, Dv10 = 2 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1.7, and the Dv50 of the binder is 2.5 µm.

Applying the porous coating slurry to one side of the porous substrate, and vacuum-drying at 60°C to 70°C to obtain a separator. The thickness of the porous coating is 5 µm.

### Comparative Embodiment 1-3

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 80:20 to obtain a mixture 1.

Mixing paraffin oil and PE particles with a weight-average molecular weight of 300,000 to 500,000 at an oil-to-material mass ratio of 80:20 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 1.5-fold in the transverse direction at 110 °C for a second time, and then heat-setting and winding up the porous substrate intermediate at 130 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 99:1. The filler particles are boehmite particles, with volume distribution particle sizes as follows: Dv50 = 4.5 µm, Dv90 = 6.5 µm, Dv10 = 1.4 µm, and with an aspect ratio of 6. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Comparative Embodiment 1-4

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 80:20 to obtain a mixture 1.

Mixing paraffin oil and PE particles with a weight-average molecular weight of 300,000 to 500,000 at an oil-to-material mass ratio of 80:20 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 1.5-fold in the transverse direction at 110 °C for a second time, and then heat-setting and winding up the porous substrate intermediate at 110 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 78:22. The filler particles are boehmite particles, with volume distribution particle sizes as follows: Dv50 = 1.2 µm, Dv90 = 3.5 µm, Dv10 = 1 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Comparative Embodiment 1-5

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 80:20 to obtain a mixture 1.

Mixing paraffin oil and PE particles with a weight-average molecular weight of 300,000 to 500,000 at an oil-to-material mass ratio of 80:20 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 0.5-fold in the transverse direction at 110 °C for a second time, and then heat-setting and winding up the porous substrate intermediate at 110 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1.2 µm, Dv90 = 3.5 µm, Dv10 = 1 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Comparative Embodiment 1-6

The preparation process is the same as that in Embodiment 1-1 except the preparation parameters of the separator.

### (1) Preparation of a separator

### Preparation of a porous substrate

Mixing paraffin oil and PE particles with a weight-average molecular weight of 1,200,000 to 1,400,000 at an oil-to-material mass ratio of 80:20 to obtain a mixture 1.

Mixing paraffin oil and PE particles with a weight-average molecular weight of 300,000 to 500,000 at an oil-to-material mass ratio of 80:20 to obtain a mixture 2.

Adding the mixture 1 and mixture 2 into two die heads of a twin-die-head extruder respectively, extruding through a two-layer die, and cooling the mixture 1 and mixture 2 on a casting roller to finally mix and form a film. A mass ratio of the mixture 1 to the mixture 2 is 45:55.

Stretching the above film 6-fold in the machine direction (MD) and 6-fold in the transverse direction (TD) at 105 °C, and then performing extraction with dichloromethane at 25 °C for 0.6 hour, and drying to obtain a porous substrate intermediate.

Stretching the porous substrate intermediate 2.5-fold in the transverse direction at 110 °C for a second time, and then heat-setting and winding up the porous substrate intermediate at 110 °C to obtain a porous substrate.

### Preparation of a porous coating slurry

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1.2 µm, Dv90 = 3.5 µm, Dv10 = 1 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

**Table 1**

| Serial number | Pore size test result of separator | | | | | | | Separator performance | | | Battery performance |
|---|---|---|---|---|---|---|---|---|---|---|---|
| | Dₘₐₓ (nm) | Dₘᵢₙ (nm) | D_{avg} (nm) | Dₘₐₓ/D_{avg} | Dₘᵢₙ/D_{avg} | Dₘₐₓ/Dₘᵢₙ | Proportion of total pore area of pores with a pore size of 30 nm to 45 nm | Heat shrink ratio at 130 °C for 1 h (%) | | Porosity of separator subjected to heating at 130 °C for 1 hour | 500^{th}-cycle capacity retention rate of battery cycled at - 10 °C (%) |
| | | | | | | | | MD | TD | | |
| Embodiment 1-1 | 35.0 | 10.0 | 25.0 | 1.40 | 0.40 | 3.50 | 10% | 2.60 | 2.50 | 30% | 81.10 |
| Embodiment 1-2 | 40.7 | 12.0 | 34.0 | 1.20 | 0.35 | 3.39 | 14% | 2.50 | 2.60 | 35% | 80.60 |
| Embodiment 1-3 | 59.0 | 13.0 | 26.5 | 2.23 | 0.49 | 4.54 | 15% | 2.60 | 2.50 | 42% | 81.90 |
| Embodiment 1-4 | 61.2 | 16.1 | 28.2 | 2.17 | 0.57 | 3.80 | 27% | 2.40 | 2.30 | 44% | 82.50 |
| Embodiment 1-5 | 62.4 | 17.0 | 31.0 | 2.01 | 0.55 | 3.67 | 25% | 2.70 | 2.70 | 45% | 81.30 |
| Embodiment 1-6 | 75.0 | 20.0 | 34.1 | 2.20 | 0.59 | 3.75 | 32% | 2.80 | 2.80 | 60% | 81.00 |
| Embodiment 1-7 | 56.0 | 15.0 | 35.0 | 1.60 | 0.43 | 3.73 | 14% | 2.70 | 2.80 | 38% | 81.70 |
| Embodiment 1-8 | 35.7 | 20.0 | 25.0 | 1.43 | 0.80 | 1.79 | 18% | 2.80 | 2.70 | 34% | 80.30 |
| Embodiment 1-9 | 60.5 | 10.0 | 45.0 | 1.34 | 0.22 | 6.05 | 18% | 2.70 | 2.80 | 44% | 80.60 |
| Embodiment 1-10 | 65.5 | 10.0 | 25.0 | 2.62 | 0.40 | 6.55 | 22% | 3.40 | 3.40 | 48% | 79.40 |
| Embodiment 1-11 | 73.0 | 11.0 | 24.5 | 2.98 | 0.45 | 6.64 | 28% | 3.40 | 3.50 | 56% | 79.30 |
| Embodiment 1-12 | 74.8 | 10.0 | 25.0 | 2.99 | 0.40 | 7.48 | 35% | 3.40 | 3.40 | 57% | 79.00 |
| Comparative Embodiment 1-1 | 30.4 | 20.0 | 29.0 | 1.05 | 0.69 | 1.52 | 8% | 4.40 | 4.50 | 25% | 70.50 |
| Comparative Embodiment 1-2 | 80.5 | 10.6 | 25.8 | 3.12 | 0.41 | 7.59 | 40% | 5.00 | 5.10 | 67% | 65.70 |
| Comparative Embodiment 1-3 | 75.5 | 8.0 | 24.0 | 3.15 | 0.33 | 9.44 | 9% | 4.60 | 4.50 | 64% | 67.90 |
| Comparative Embodiment 1-4 | 71.0 | 23.0 | 28.0 | 2.54 | 0.82 | 3.09 | 6% | 4.90 | 4.90 | 65% | 66.10 |
| Comparative Embodiment 1-5 | 74.0 | 11.0 | 23.0 | 3.22 | 0.48 | 6.73 | 10% | 4.70 | 4.50 | 66% | 67.30 |
| Comparative Embodiment 1-6 | 75.0 | 6.0 | 48.0 | 1.56 | 0.13 | 12.50 | 11% | 5.20 | 5.50 | 65% | 64.20 |

As can be seen from the test results in Table 1, by designing the separator to satisfy the conditions of Dₘₐₓ = 35 nm to 75 nm, Dₘᵢₙ = 10 nm to 20 nm, D_{avg} = 25 nm to 45 nm, and Dₘₐₓ/D_{avg} = 1.20 to 2.99, this application enables the pore size distribution of the separator to exhibit a non-uniform characteristic, thereby striking a balance between the migration rate of lithium ions on the positive electrode side of the separator and that on the negative electrode side, and in turn, facilitating smooth intercalation of lithium ions into the negative electrode, and effectively reducing the purple-spot lithium plating on the negative electrode. Therefore, the separator provided in an embodiment of this application endows the lithium-ion battery with superior low-temperature cycle performance. The separator provided in an embodiment of this application also demonstrates a low heat shrink ratio, thereby also endowing the lithium-ion battery with superior high-temperature stability and reliability.

As can also be seen from the test results of Embodiments 1-1 to 1-12, by additionally adjusting the ranges of Dₘₐₓ/D_{avg}, Dₘᵢₙ/D_{avg}, and/or Dₘₐₓ/Dₘᵢₙ, this application strikes a better balance between the low-temperature cycle performance and the high-temperature stability of the lithium-ion battery.

### Embodiment 2-1

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following three monomers: styrene, methyl methacrylate, and isooctyl acrylate, with a mass ratio of the three monomers being 80:3:17. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 2-2

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following three monomers: styrene, methyl methacrylate, and isooctyl acrylate, with a mass ratio of the three monomers being 86:4:10. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 2-3

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following three monomers: styrene, methyl methacrylate, and isooctyl acrylate, with a mass ratio of the three monomers being 90:2:8. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 2-4

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following three monomers: styrene, methyl methacrylate, and isooctyl acrylate, with a mass ratio of the three monomers being 75:5:20. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 2-5

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following three monomers: styrene, methyl methacrylate, and isooctyl acrylate, with a mass ratio of the three monomers being 95:1:4. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 2-6

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following three monomers: styrene, methyl methacrylate, and isooctyl acrylate, with a mass ratio of the three monomers being 68:7:25. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

**Table 2**

| Serial number | Binder | | | Battery performance | |
|---|---|---|---|---|---|
| | Type of comonomer | Mass ratio between comonomers | Weight-average molecular weight | 450^{th}-cycle capacity retention rate of battery cycled at a 2C rate at 45 °C | 130 °C oven test pass rate |
| Embodiment 1-1 | Styrene, methyl methacrylate, and isooctyl acrylate | 76.6:3.8:19.6 | 900,000 to 1,000,000 | 80.00% | 11/15 |
| Embodiment 2-1 | Styrene, methyl methacrylate, and isooctyl acrylate | 80:3:17 | 900,000 to 1,000,000 | 80.70% | 15/15 |
| Embodiment 2-2 | Styrene, methyl methacrylate, and isooctyl acrylate | 86:4:10 | 900,000 to 1,000,000 | 80.50% | 15/15 |
| Embodiment 2-3 | Styrene, methyl methacrylate, and isooctyl acrylate | 90:2:8 | 900,000 to 1,000,000 | 80.00% | 11/15 |
| Embodiment 2-4 | Styrene, methyl methacrylate, and isooctyl acrylate | 75:5:20 | 900,000 to 1,000,000 | 79.60% | 11/15 |
| Embodiment 2-5 | Styrene, methyl methacrylate, and isooctyl acrylate | 95:1:4 | 900,000 to 1,000,000 | 78.80% | 9/15 |
| Embodiment 2-6 | Styrene, methyl methacrylate, and isooctyl acrylate | 68:7:25 | 900,000 to 1,000,000 | 78.60% | 8/15 |

As can be seen from the test results in Table 2, by further adjusting the types and mass ratios of the ester-group-free monomers and the ester-group-containing monomers in the binder, this application endows the lithium-ion battery with better high-temperature cycle performance and thermal oven performance.

### Embodiment 3-1

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 1,500,000 to 1,600,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 3-2

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 500,000 to 600,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 3-3

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following three monomers: styrene, methyl methacrylate, and isooctyl acrylate, with a mass ratio of the three monomers being 76.6:3.8:19.6. The weight-average molecular weight of the binder is 1,900,000 to 2,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

**Table 3**

| Serial number | Binder | | | Battery performance | |
|---|---|---|---|---|---|
| | Type of comonomer | Mass ratio between comonomers | Weight-average molecular weight | 450^{th}-cycle capacity retention rate of battery cycled at a 2C rate at 45 °C | 130 °C oven test pass rate |
| Embodiment 3-1 | Styrene, methyl methacrylate, and isooctyl acrylate | 76.6:3.8:19.6 | 1,500,000 to 1,600,000 | 79.20% | 13/15 |
| Embodiment 3-2 | Styrene, methyl methacrylate, and isooctyl acrylate | 76.6:3.8:19.6 | 500,000 to 600,000 | 77.30% | 9/15 |
| Embodiment 3-3 | Styrene, methyl methacrylate, and isooctyl acrylate | 76.6:3.8:19.6 | 1,900,000 to 2,100,000 | 77.50% | 9/15 |

As can be seen from the test results in Table 3, by further adjusting the weight-average molecular weight of the binder, this application endows the lithium-ion battery with better high-temperature cycle performance and thermal oven performance.

### Embodiment 4-1

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following two monomers: styrene and butyl acrylate, with a mass ratio of the two monomers being 1:1. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 4-2

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following two monomers: styrene and butyl acrylate, with a mass ratio of the two monomers being 2:1. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 4-3

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following two monomers: styrene and butyl acrylate, with a mass ratio of the two monomers being 3:1. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 4-4

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following two monomers: styrene and butyl acrylate, with a mass ratio of the two monomers being 4:1. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

### Embodiment 4-5

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following two monomers: styrene and butyl acrylate, with a mass ratio of the two monomers being 5:1. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 5 µm.

**Table 4**

| Serial number | Binder | | Battery performance | |
|---|---|---|---|---|
| | Type of comonomer | Mass ratio between comonomers | 450^{th}-cycle capacity retention rate of battery cycled at a 2C rate at 45 °C | 130 °C thermal oven test pass rate |
| Embodiment 4-1 | Styrene and butyl acrylate | 1:1 | 78.40% | 11/15 |
| Embodiment 4-2 | Styrene and butyl acrylate | 2:1 | 78.50% | 13/15 |
| Embodiment 4-3 | Styrene and butyl acrylate | 3:1 | 78.90% | 14/15 |
| Embodiment 4-4 | Styrene and butyl acrylate | 4:1 | 78.30% | 13/15 |
| Embodiment 4-5 | Styrene and butyl acrylate | 5:1 | 78.20% | 12/15 |

As can be seen from the test results in Table 4, by further adjusting the types and mass ratios of the ester-group-free monomers and the ester-group-containing monomers in the binder, this application endows the lithium-ion battery with better high-temperature cycle performance and thermal oven performance.

### Embodiment 5-1

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following two monomers: styrene and butyl acrylate, with a mass ratio of the two monomers being 1:1. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 3 µm.

### Embodiment 5-2

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following two monomers: styrene and butyl acrylate, with a mass ratio of the two monomers being 1:1. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 8 µm.

### Embodiment 5-3

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following two monomers: styrene and butyl acrylate, with a mass ratio of the two monomers being 1:1. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 10 µm.

### Embodiment 5-4

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following two monomers: styrene and butyl acrylate, with a mass ratio of the two monomers being 1:1. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 12 µm.

### Embodiment 5-5

The preparation process is the same as that in Embodiment 1-1 except the preparation parameters of the porous coating of the separator.

Mixing filler particles and a binder at a specified ratio, and then adding deionized water, and stirring well to form a porous coating slurry. The solid content of the porous coating slurry is approximately 40%, and the viscosity is approximately 30 mPa·s. The mass ratio of the filler particles to the binder is 95:5. The filler particles are boehmite particles, with volume distribution particle sizes as follows: Dv50 = 1 µm, Dv90 = 2 µm, Dv10 = 0.6 µm, and with an aspect ratio of 3.0. The binder includes a copolymer formed from the following two monomers: styrene and butyl acrylate, with a mass ratio of the two monomers being 1:1. The weight-average molecular weight of the binder is 900,000 to 1,000,000, the aspect ratio of the binder is 1, and the Dv50 of the binder is 1.3 µm.

Applying the porous coating slurry to one side of the porous substrate, and vacuum-drying at 60°C to 70°C to obtain a separator. The thickness of the porous coating is 1.8 µm.

**Table 5**

| Serial number | Thickness of | Total thickness | Battery performance | |
|---|---|---|---|---|
| | porous coating (µm) | of separator (µm) | 450^{th}-cycle capacity retention rate of battery cycled at a 2C rate at 45 °C | 130 °C thermal oven test pass rate |
| Embodiment 5-1 | 3 | 10 | 78.00% | 10/15 |
| Embodiment 5-2 | 8 | 15 | 78.20% | 14/15 |
| Embodiment 5-3 | 10 | 17 | 77.80% | 15/15 |
| Embodiment 5-4 | 12 | 19 | 77.10% | 15/15 |
| Embodiment 5-5 | 1.8 | 9 | 76.50% | 9/15 |

As can be seen from the test results in Table 5, by further adjusting the thickness of the porous coating, this application endows the lithium-ion battery with better high-temperature cycle performance and thermal oven performance.

### Embodiments 6-1 to 6-17

The preparation processes in Embodiments 6-1 to 6-17 are based on Embodiment 1-1, but differs in that the 1,3-propane sultone and ethylene sulfate shown in Table 6 are further added to the electrolyte of Embodiment 1-1. In Table 6, A denotes a mass fraction of the 1,3-propane sultone in the total mass of the electrolyte, and B denotes a mass fraction of the ethylene sulfate in the total mass of the electrolyte.

**Table 6**

| Serial number | A | B | A/B | Battery performance | |
|---|---|---|---|---|---|
| | | | | Maximum temperature rise value in fast-charge test (°C) | 450^{th}-cycle capacity retention rate of battery cycled at a 2C rate at 45 °C |
| Embodiment 1-1 | 0 | 0 | - | 33.5 | 80.0% |
| Embodiment 6-1 | 1.6% | 0.8% | 2.0 | 30.5 | 80.8% |
| Embodiment 6-2 | 2.4% | 0.8% | 3.0 | 30.2 | 81.0% |
| Embodiment 6-3 | 2.6% | 0.8% | 3.25 | 30.1 | 81.5% |
| Embodiment 6-4 | 2.8% | 0.8% | 3.5 | 29.6 | 81.7% |
| Embodiment 6-5 | 3.0% | 0.8% | 3.75 | 29.5 | 81.6% |
| Embodiment 6-6 | 3.2% | 0.8% | 4.0 | 29.1 | 81.9% |
| Embodiment 6-7 | 4.0% | 0.8% | 5.0 | 29.0 | 82.0% |
| Embodiment 6-8 | 4.8% | 0.8% | 6.0 | 28.7 | 82.5% |
| Embodiment 6-9 | 5.0% | 0.8% | 6.25 | 27.5 | 83.7% |
| Embodiment 6-10 | 5.2% | 0.8% | 6.5 | 28.8 | 82.0% |
| Embodiment 6-11 | 5.4% | 0.8% | 6.75 | 29.6 | 81.7% |
| Embodiment 6-12 | 5.6% | 0.8% | 7.0 | 29.7 | 81.5% |
| Embodiment 6-13 | 5.8% | 0.8% | 7.25 | 29.8 | 81.5% |
| Embodiment 6-14 | 6.0% | 0.8% | 7.5 | 30.2 | 81.0% |
| Embodiment 6-15 | 6.4% | 0.8% | 8.0 | 30.7 | 80.5% |
| Embodiment 6-16 | 6.6% | 0.8% | 8.25 | 31.3 | 80.0% |
| Embodiment 6-17 | 0.8% | 0.8% | 1.0 | 33.0 | 80.2% |

As can be seen from the test results in Table 6, by further adjusting the mass ratio of 1,3-propane sultone to ethylene sulfate in the electrolyte, this application reduces the maximum temperature rise value of the lithium-ion battery in the fast-charge test, thereby improving the fast-charge performance and high-temperature cycle stability of the lithium-ion battery.

The above descriptions are merely some specific embodiments of this application, but the protection scope of this application is not limited to such embodiments. Various equivalent modifications and replacements easily conceivable by any person skilled in the art without departing from the technical scope disclosed herein still fall within the protection scope of this application. Therefore, the protection scope of this application is subject to the protection scope of the claims.

## Claims

1. A separator, comprising a porous substrate and a porous coating located on at least one side of the porous substrate, wherein
the porous coating comprises filler particles and a binder;
a maximum pore size of the separator is denoted as Dₘₐₓ, a minimum pore size of the separator is denoted as Dₘᵢₙ, and an average pore size of the separator is denoted as D_{avg}, all in units of nm, Dₘₐₓ is 35 nm to 75 nm, Dₘᵢₙ is 10 nm to 20 nm, D_{avg} is 25 nm to 45 nm, and Dₘₐₓ/D_{avg} is 1.20 to 2.99.

2. The separator according to claim 1, **characterized in that** Dₘₐₓ/D_{avg} is 1.20 to 2.62, and/or Dₘᵢₙ/D_{avg} is 0.35 to 0.59.

3. The separator according to claim 2, **characterized in that** Dₘₐₓ/D_{avg} is 1.60 to 2.23, and/or Dₘᵢₙ/D_{avg} is 0.43 to 0.57.

4. The separator according to any one of claims 1 to 3, **characterized in that** Dₘₐₓ/Dₘᵢₙ is 3.39 to 6.05.

5. The separator according to claim 4, **characterized in that** Dₘₐₓ/Dₘᵢₙ is 3.67 to 4.54.

6. The separator according to claim 1, **characterized in that** a total pore area of pores with a pore size of 30 nm to 45 nm in the separator accounts for 10% to 35% of a total pore area of the separator.

7. The separator according to claim 6, **characterized in that** the total pore area of pores with a pore size of 30 nm to 45 nm in the separator accounts for 14% to 27% of the total pore area of the separator.

8. The separator according to claim 1, **characterized in that** the porous substrate satisfies at least one of the following conditions (1) to (3):
(1) a porosity of the porous substrate is 20% to 50%;
(2) an average pore size of the porous substrate is 30 nm to 60 nm; or
(3) a thickness of the porous substrate is 4 µm to 15 µm.

9. The separator according to claim 1, **characterized in that** the separator satisfies at least one of the following conditions (1) to (4):
(1) a porosity of the separator subjected to heating at 130 °C for 1 hour is 30% to 60%;
(2) an areal density of the separator is 1 g/m² to 5 g/m²;
(3) a total thickness of the separator is 10 µm to 17 µm; or
(4) a thickness of the porous coating is 2 µm to 10 µm.

10. The separator according to claim 1, **characterized in that** the filler particles comprise at least one of organic particles or inorganic particles.

11. The separator according to claim 10, **characterized in that**
the organic particles comprise vinylidene fluoride-based resin particles, and volume distribution particle sizes of the organic particles are as follows: Dv50 is 0.8 µm to 2 µm, Dv90 is 1.5 µm to 4 µm, and Dv10 is 0.1 µm to 1.8 µm; and/or
the inorganic particles comprise ceramic particles, and volume distribution particle sizes of the inorganic particles are as follows: Dv50 is 1 µm to 4 µm, Dv90 is 2 µm to 6 µm, and Dv10 is 0.6 µm to 1.2 µm.

12. The separator according to any one of claims 10 to 11, **characterized in that**
an aspect ratio of the organic particles is (1 to 1.5):1; and/or
an aspect ratio of the inorganic particles is (2 to 5):1.

13. The separator according to claim 1, **characterized in that** the binder comprises a copolymer containing at least two structural units; the at least two structural units are all derived from monomers containing an unsaturated double bond; of the monomers containing an unsaturated double bond, at least one contains an ester group, and at least one contains no ester group; and a weight-average molecular weight of the binder is 800,000 to 1,800,000;
the monomer containing an ester group comprises at least one of methyl methacrylate, ethyl methacrylate, isooctyl acrylate, n-propyl acrylate, butyl acrylate, cyclohexyl acrylate, or 2-hydroxyethyl acrylate; and
the monomer containing no ester group comprises at least one of styrene, butadiene, methacrylamide, acrylamide, or acrylonitrile.

14. The separator according to claim 13, **characterized in that** the binder comprises a copolymer formed from the following three monomers: styrene, methyl methacrylate, and isooctyl acrylate; and based on a total mass of the three monomers being 100 parts, a mass of styrene is 75 parts to 90 parts, a mass of the methyl methacrylate is 2 parts to 5 parts, and a remainder is isooctyl acrylate.

15. The separator according to claim 14, **characterized in that** the binder comprises a copolymer formed from the following two monomers: styrene and butyl acrylate, and a mass ratio between the two monomers is (1 to 5):1.

16. An electrochemical device, comprising a positive electrode plate, a negative electrode plate, an electrolyte, and a separator, **characterized in that** the separator comprises the separator according to any one of claims 1 to 15.

17. The electrochemical device according to claim 16, **characterized in that** the electrolyte contains 1,3-propane sultone and ethylene sulfate; a mass fraction of the 1,3-propane sultone in a total mass of the electrolyte is A, a mass fraction of the ethylene sulfate in the total mass of the electrolyte is B, satisfying: 2.0 ≤ A/B ≤ 8.0.

18. The electrochemical device according to claim 17, **characterized in that** 3.5 ≤ A/B ≤ 7.25.

19. The electrochemical device according to claim 18, **characterized in that** 4.0 ≤ A/B ≤ 6.5.

20. The electrochemical device according to any one of claims 16 to 19, **characterized in that** the positive electrode plate comprises a positive active material, and a powder volume resistivity of the positive active material at 15 MPa is 100 KΩ·cm to 450 KΩ·cm.

21. An electronic device, **characterized in that** the electronic device comprises the electrochemical device according to any one of claims 16 to 20.
